(19) **Europäisches Patentamt / European Patent Office / Office européen des brevets**

(11) **EP 1 499 031 B1**

(12) **EUROPEAN PATENT SPECIFICATION**

(45) Date of publication and mention
of the grant of the patent:
**25.07.2007 Bulletin 2007/30**

(51) Int Cl.:
**H04B 1/69** (2006.01)

(21) Application number: **04254288.6**

(22) Date of filing: **16.07.2004**

(54) **Method for ultra wideband communication using frequency band modulation, and system for the same**

Verfahren zur Ultrabreitbandnachrichtenübertragung mit Frequenzbandmodulation und System zu diesem Zweck

Procédé de communication à bande ultra-large utilisant une modulation de bande de fréquence, et système à cet effet

(84) Designated Contracting States:
**DE FR GB IT NL**

(30) Priority: **18.07.2003 KR 2003049160**

(43) Date of publication of application:
**19.01.2005 Bulletin 2005/03**

(73) Proprietor: **SAMSUNG ELECTRONICS CO., LTD.**
**Suwon-si,**
**Gyeonggi-do (KR)**

(72) Inventor: **Choi, Yun-hwa**
**Seoul (KR)**

(74) Representative: **Robinson, Ian Michael et al**
**Appleyard Lees**
**15 Clare Road**
**Halifax HX1 2HY (GB)**

(56) References cited:
**US-A1- 2003 099 299**

Printed by Jouve, 75001 PARIS (FR)

**Description**

The present invention relates to a method and system for ultra wideband wireless communication, and more particularly, to a method and system for ultra wideband wireless communication using frequency band modulation (FBM).

Recently, rapid advances in wireless communication technology and proliferation of wireless devices have led to a tremendous change in the way people live. In particular, ultra wideband (to be abbreviated as "UWB") communication, which enables high-speed wideband wireless communication while coexisting with conventional wireless communication service without acquisition of additional frequency resources, has been recently researched.

A UWB communication system utilizes short pulses (wavelets) having a bandwidth of several GHz. In the UWB communication system, data is communicated without using a carrier, thus consuming less power than in the conventional communication. Also, since a UWB signal used in the UWB communication is detected at less than a noise level in a frequency domain, it can be advantageously used without interference between other devices. Meanwhile, since the UWB has a pulse of a very small duty cycle, it offers various advantages including a high transfer rate, multiple access implementation, and low multipath interference.

Although the UWB communication can be applied for various uses, present studies tend to focus on high-rate, short-range, i.e., in a range of several to several tens of meters, communication methods. Since a UWB communication method enables high-speed data transmission, ultra high quality images based on digital high-definition television broadcasting or digital versatile disk (DVD) can be transmitted in the form of streaming data using UWB communication methods.

Currently proposed available signal modulation techniques for UWB communication include pulse position modulation (PPM) using positional change on time slots of a UWB pulse (UWB wavelet), pulse amplitude modulation (PAM) using the amplitude of a pulse, phase shift keying (PSK) such as binary phase shift keying (BPSK) or quadrature phase shift keying (QPSK), orthogonal frequency division modulation (OFDM), and a combination of these techniques, e.g., a combination of BPSK and PPM.

These techniques have been proposed in attempts to minimize a noise level while maximizing the quantity of information to be transmitted (received). However, increasing the quantity of information to be actually transmitted using the techniques may degrade the accuracy of the signal level. In addition, existing techniques do not provide a sufficiently satisfactory solution to allow detection of extremely short pulses and acquisition of phase information and synchronization at a receiver end, which are required to carry out data communication based on a phase difference of pulses.

US 2003/099299 A1 discloses a method and apparatus for data transfer using a time division multiple frequency scheme. A set of data values is encoded to produce a corresponding series of ordered n-tuples. The method also includes transmitting, according to the series of ordered n-tuples, a plurality of bursts over a plurality n of frequency bands. Specifically, for each of the plurality of bursts, a frequency band occupied by the burst is indicated by the order within its n-tuple of an element corresponding to the burst. The pre-characterising portions of the amended claims are based on this document.

To address the above-described problems, it is an object of the present invention to provide a method and system for UWB communication which allows for a high data transfer rate with a reduced number of UWB pulses and a system using the same.

According to the present invention there is provided an apparatus and method as set forth in the appended claims. Preferred features of the invention will be apparent from the dependent claims, and the description which follows.

The above aspects and advantages of the present invention will become more apparent by describing in detail illustrative, non-limiting embodiments thereof with reference to the attached drawings in which:

Figure 1 shows power levels of a UWB signal having four subbands in a frequency domain;

Figures 2A and 2B are exemplary mapping tables for the respective subbands of the UWB signal mapped to bit groups according to an embodiment of the present invention;

Figure 3 is a block diagram showing a transmitter and a receiver for UWB communication according an embodiment of the present invention;

Figure 4 is a block diagram of a UWB signal generator shown in Figure 3;

Figure 5 is a function block diagram of a signal detector shown in Figure 3;

Figure 6 is a flow diagram showing a transmission/reception process of a UWB signal according to the present invention; and

Figure 7 shows an actual data transmission process using a UWB signal having four subbands.

Advantages and features of the present invention and methods for accomplishing the same will now be described more fully with reference to the accompanying drawings, in which illustrative, non-limiting embodiments of the invention are shown.

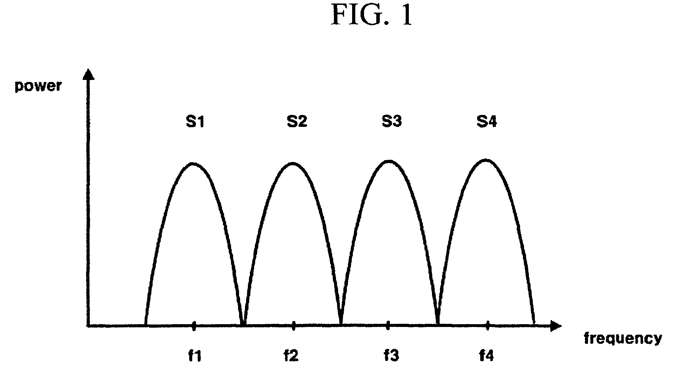

Figure 1 shows power levels of UWB signals having four subbands having center frequencies f1, f2, f3, and f4, respectively, in a frequency domain. In the present embodiment, the UWB signal having a center frequency f1 has a symbol S1. Likewise, the UWB signals having center frequencies f2, f3, and f4 have symbols S2, S3, and S4, respectively. It can be generalized that subbands having m center frequencies produce m symbols S1 through Sm. The respective symbols can be mapped to different bit groups consisting of one or more bits. As described above, a modulation technique in which data transmission is carried out independently over each subband, is called frequency band modulation (FBM).

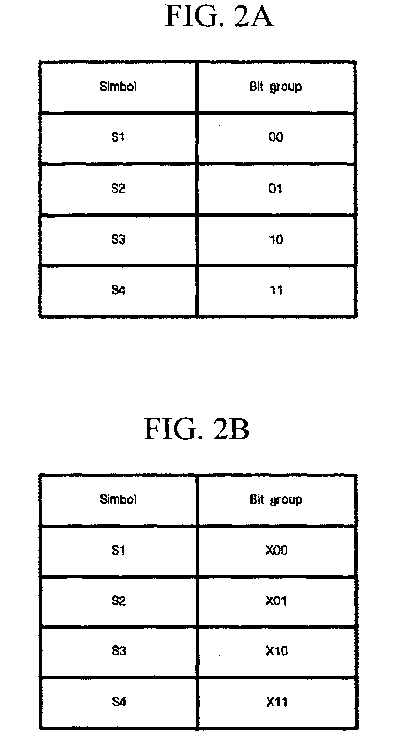

Figures 2A and 2B are exemplary mapping tables for the respective subbands of the UWB signals mapped to bit groups according to an embodiment of the present invention.

Referring to Figure 2A, the symbol S1 is mapped to a bit group consisting of 2 bits "00" and the symbols S2, S3, and S4 are mapped to bit groups "01", "10", and "11", respectively. Figure 2B shows the symbols S1 through S4 mapped to bit groups each consisting of 3 or more bits, respectively. The respective bit groups are distinguished from one another by two last bits among bits forming each bit group. Thus, when the two last bits of a bit group are "00", S1 is mapped to the bit group. When the two last bits are "01", S2 is mapped to the bit group. When the two last bits are "10", S3 is mapped to the bit group. When the two last bits are "11", S4 is mapped to the bit group. For example, since a bit group consisting of four bits "1111" is represented as "X11", S4 is mapped thereto. Likewise, since a bit group consisting of three bits "001" is represented as "X01", S2 is mapped thereto. Meanwhile, when the respective symbols are to be mapped to bit groups each consisting of one single bit, the symbols S1 and S2 may be mapped to bit groups each consisting of one bit "0", and the symbols S3 and S4 may be mapped to bit groups each consisting of one bit "1". Of course, the symbols S1, S2, and S3 may be mapped to bit groups each consisting of one bit "0", while the symbol S4 maps to a bit group consisting of one bit "1".

A technical feature of the present invention is to represent UWB signals having different center frequencies using symbols, which are then mapped to bit groups consisting of one or more bits, for data transmission. In an exemplary embodiment, a bit group consisting of n bits is mapped to a UWB signal having m different center frequencies, which is defined in Equation 1 below:

[Equation 1]

$$n = \log_2 m$$

where m and n are each independently a natural number.

When the value of $\log_2 m$ is greater than n, the bit group is preferably constructed to satisfy $n = [\log_2 m]$, where two or more symbols are mapped to a bit group to have redundancy of data bits.

As shown in Figure 2B, when the value of $\log_2 m$ is smaller than n, all bits forming a bit group cannot be accurately represented just by using FBM, and a combination of different modulation techniques must be employed. UWB communication using a combination of BPSK and FBM techniques, for example, enables approximately two times more bit groups than subbands to be distinguished from one another. In other words, when a UWB signal having 8 subbands employs the FBM method, 3-bit data can be transmitted using one UWB pulse. When the UWB employs a combination of FBM and BPSK techniques, 4-bit data can be transmitted.

Thus, the UWB communication using FBM according to the present invention can be combined with any modulation technique applicable to multiband UWB communication methods. In this case, the information corresponding to the sum of the number of bits transmitted by the modulation technique and the number of bits transmitted by the FBM technique can be transmitted by a single UWB pulse.

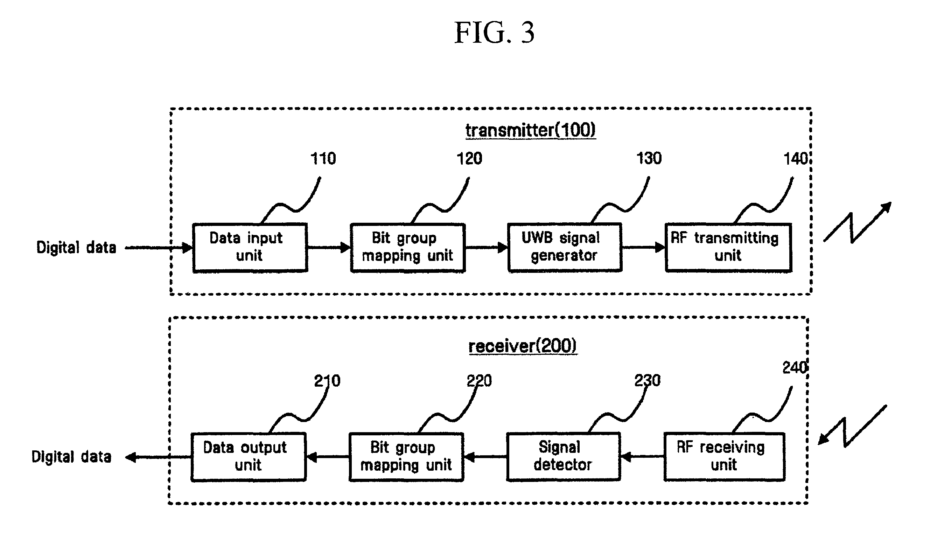

Figure 3 is a block diagram showing a transmitter 100 and a receiver 200 for UWB communication according an embodiment of the present invention.

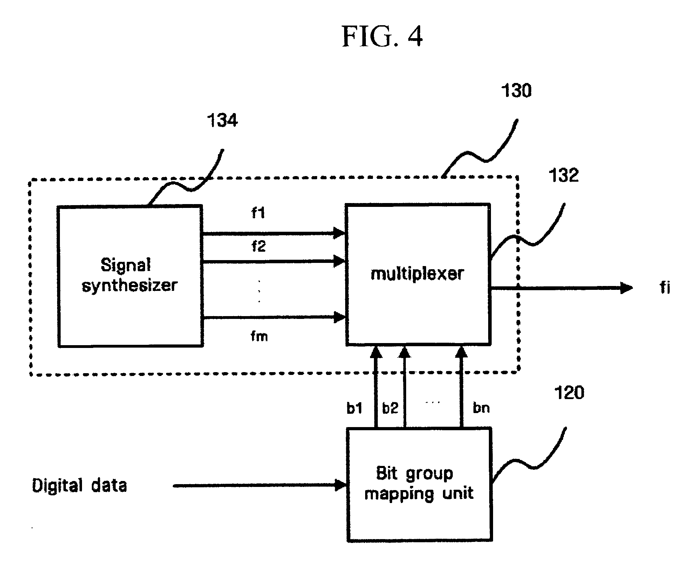

The transmitter 100 includes a data input unit 110 that serves as an interface for inputting external digital data, a bit group mapping unit 120 for grouping and mapping the digital data input through the data input unit 110 to produce bit groups, a UWB signal generator 130 for generating UWB signals having symbols mapped to the bit groups output from the bit group mapping unit 120, and a radio frequency (RF) transmitting unit 140 for transmitting the generated UWB signals over wireless channels. An exemplary illustration of the UWB signal generator 130 will later be described with reference to Figure 4.

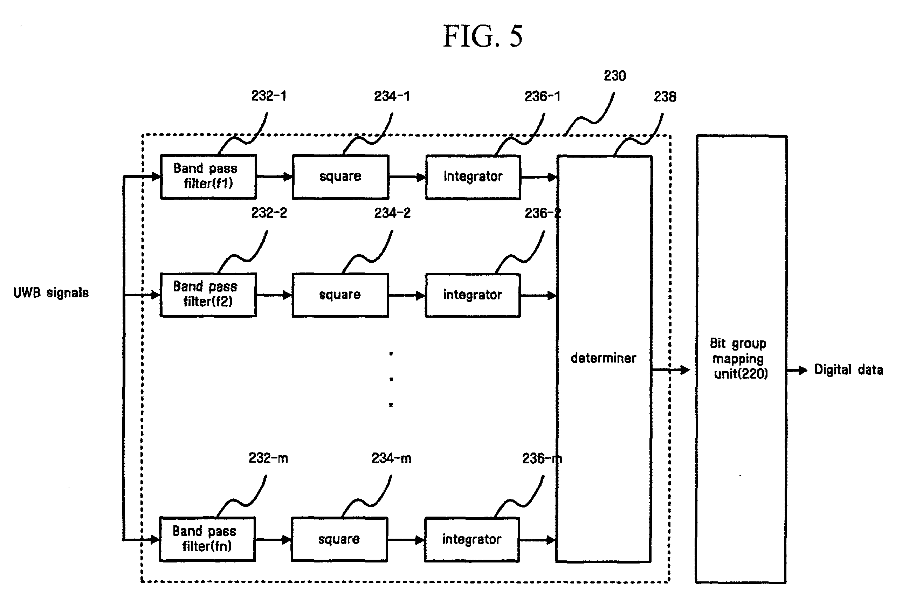

The receiver 200 includes an RF receiving unit 240 for receiving the UWB signals transmitted over the wireless channels, a signal detector 230 for detecting which subbands the UWB signals received by the RF receiving unit 240 are derived from, a bit group mapping unit 220 that produces bit groups, maps the bit groups to the subbands of the UWB signals detected from the signal detector 230 and generates digital data, and a data output unit 210 that serves as an interface for outputting the digital data input from the bit group mapping unit 220 to the outside. An exemplary illustration of the signal detector 230 will later be described with reference to Figure 5.

Figure 4 is a block diagram of the UWB signal generator 130 shown in Figure 3.

The signal generator 130 includes a signal synthesizer 134 that generates m UWB signals having different center frequencies, and a multiplexer 132 that selectively outputs one of the m UWB signals generated from the signal synthesizer 134.

The UWB signal detector 130 operates as follows. When the digital data is input to the bit group mapping unit 120, the bit group mapping unit 120 groups and maps the digital data into groups in units of n bits. When n bits of digital data are input, the bit group mapping unit 120 groups the input bits and transmits control signals having n bits, that is, $b1$ through $bn$, to the multiplexer 132. The multiplexer 132 outputs a UWB signal having the corresponding center frequency (=fi) in response to the control signal. Figure 4 illustrates a UWB communication method using only FBM, in which when the FBM technique is combined with BPSK, the bit group mapping unit 120 transmits a control signal, e.g., $bn$, to the signal synthesizer 134 so that the phase of the UWB signal generated at the signal synthesizer 134 becomes 0 or 180 degrees according to the type of the bit sequence of the control signal, for example, $bn$. Likewise, when the FBM technique is combined with other UWB modulation technique, some bits are used for the corresponding UWB modulation technique combined with the FBM technique and the other bits are used for the FBM technique.

Figure 5 is a function block diagram of the signal detector shown in Figure 3.

The signal detector 230 is preferably, but not necessarily, an energy detector for converting an electromagnetic wave in a particular band into heat energy. In an exemplary embodiment of the present invention, in order to detect USB signals having m subbands having different center frequencies, m energy detectors are employed. The signal detector 230 includes m bandpass filters 232-1 through 232-m for the respective subbands, m squaring means 234-1 through 234-m for squaring input signals, m integrators 236-1 through 236-m for integrating the squared signals in given period units, and a determiner 238 for determining the value of which integrator among the integrators 236-1 through 236-m is largest in given period units. For example, assuming that a UWB signal having a symbol S2 is input to the signal detector 230, a UWB signal having a center frequency f2 passes through the bandpass filter 232-2 while only noise passes through the other bandpass filters. The USB signal having passed through the bandpass filter 232-2 is squared to then be applied to the corresponding integrator. Among the integrators 236-1 through 236-m, the integrator 236-2 to which the UWB signal, rather than noise, is applied will have the largest value. Thus, the determiner 238 determines that the UWB signal having the center frequency f2 is input to the bit group mapping unit 220. Then, the determiner 238 notifies the bit group mapping unit 220 of the fact that the UWB signal having a symbol S2 is input thereto. The bit group mapping unit 220 outputs digital data corresponding to the symbol S2.

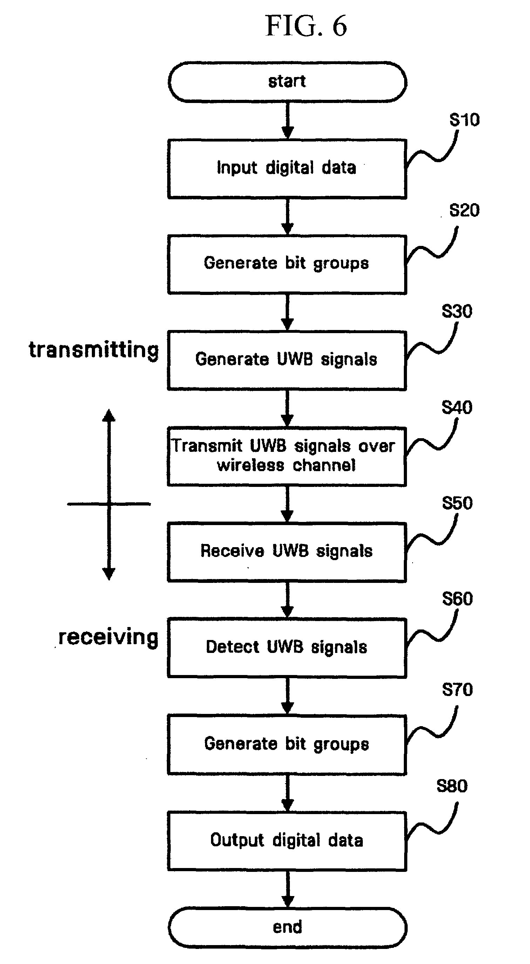

Figure 6 is a flow diagram showing a transmission/reception process of UWB signals according to an aspect of the present invention.

First, digital data in the form of bitstreams is input in step S10. The input digital data is grouped in units of n bits to generate bit groups in step S20. In step S30, UWB signals mapped according to types of input bit groups, that is, symbols, which are determined by bits forming the bit group, are generated. The generated UWB signals are transmitted over wireless channels in step S40. In such a manner, the USB signals are transmitted using FBM in steps S10 through S40.

At a receiver end, the UWB signals transmitted over the wireless channels are received through antennas in step S50. It is determined from which subbands the received UWB signals are derived in step S60. Bit groups are generated according to the determination result in step S70. The bit groups are converted into digital data to then be output in step S80.

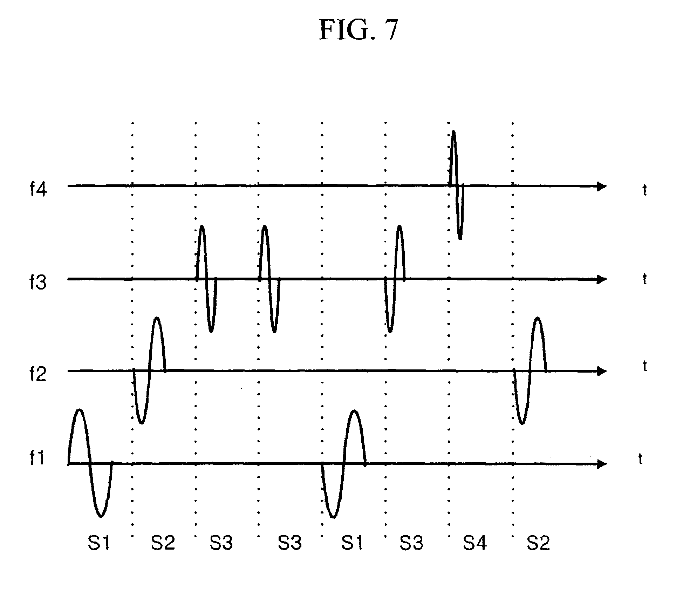

Figure 7 shows an actual data transmission process using UWB signals having four subbands, in which the USB signals having respective center frequencies f1 through f4 have symbols S1 through S4. The symbols of the UWB signals are transmitted in the order S1, S2, S3, S3, S1, S3, S4 and S2. In the case where the symbols are mapped to the bit groups as shown in Figure 2A, the bit groups transmitted by the UWB signals shown in Figure 7 are "00", "01", "10", "10", "00", "10", "11", "01". Thus, the transmitted digital data streams are patterned as "0001101000101101".

It will be understood that the FBM method shown in Figure 7 for transmitting and receiving symbols can be combined with another modulation technique, such as BPSK, as described above, so that each symbol may contain more bits than when using the FBM method alone.

It will be understood by those skilled in the art that the foregoing and other changes in form and details may be made therein without departing from the scope of the invention which should be limited only by the scope of the appended claims. For example, while the illustrative preferred embodiment has shown that the signal detector was implemented by an energy detector, it can be implemented by a mixer, synchronizing means and an integrator like in the conventional technology.

As described above, the multiband UWB communication method according to the present invention can achieve a high data transfer rate in proportion to the number of bands.

**Claims**

1. A method for ultra wideband (UWB) communication using frequency band modulation comprising the steps of:

generating first UWB signals (S30);
transmitting the generated first UWB signals over at least one wireless channel (S40); and
receiving second UWB signals (S50) and demodulating the received second UWB signals into digital data using a predetermined demodulation method (S50, S60);
**characterised in that**:

the first UWB signals are generated by grouping digital data (S20) in units of a predetermined number n of bits to produce first bit groups where n is greater than 1 and modulating each of the first bit groups to generate corresponding first UWB signals in one of a plurality of m subbands having different center frequencies mapped according to the bit pattern of each of the corresponding first bit groups.

2. The method of claim 1, wherein modulating the first bit groups comprises generating the first UWB signals of m subbands mapping to the first bit groups in the order of the first bit groups.

3. The method of claim 1 or 2, wherein demodulating the received second UWB signals comprises generating second bit groups mapping to the respective subbands after detecting the received second UWB signals for the corresponding subbands, and generating digital data using the generated second bit groups.

4. The method of claim 3, wherein generating the second bit groups comprises integrating energy levels of the second UWB signals each having passed through a bandpass filter for each subband by the length of each second UWB signal, and generating the second bit groups mapping to the subbands whose integrated values are greater than a predetermined magnitude.

5. The method of any preceding claim, wherein the predetermined number n of bits forming the first bit groups is defined by Equation below:

$$n = [\log_2 m]$$

where m denotes the number of available subbands.

6. The method of claim 5, wherein the value of $\log_2 m$ is a natural number.

7. A system for ultra wideband (UWB) communication using frequency band modulation comprising:

a transmitter (100) arranged to transmit generated first UWB signals over at least one wireless channel; and
a receiver (200) arranged to receive second UWB signals and demodulate the received second USB signals into digital data using a predetermined demodulation method;
**characterised in that**:

the transmitter (100) is arranged to group digital data in units of a predetermined number n of bits to produce first bit groups when n is greater than 1, and modulate each of the first bit groups into corresponding first UWB signals in one of a plurality of m subbands having different center frequencies mapped according to the bit pattern of each of the corresponding first bit groups.

8. The system of claim 7, wherein the transmitter (100) comprises:

an input unit (110) arranged to receive digital data;
m UWB signal generators (130) arranged to generate first UWB signals of m subbands having different center frequencies;
a bit group mapping unit (120) arranged to group the digital data in units of the predetermined number of bits to produce the first bit groups and activates the UWB signal generators (130) each generating the first UWB signals of m subbands mapped to the respective first bit groups; and
a radio frequency (RF) transmitting unit (140) arranged to transmit the mapped subbands over the at least one wireless channel.

9. The system of claim 7 or 8, wherein the receiver (200) comprises:

signal detectors (230) for m subbands having different center frequencies; and
a bit group mapping unit (220) arranged to generate second bit groups mapped to signals input to the signal detectors (230) and generate digital data using the generated second bit groups.

10. The system of claim 9, wherein each of the signal detectors (230) comprises a bandpass filter for filtering the frequency of each subband, and an energy detector.

11. The system of claim 7, 8, 9 or 10, wherein the predetermined number n of bits forming each bit group is defined by Equation below:

$$n = [\log_2 m]$$

where m denotes the number of available subbands.

12. The system of claim 11, wherein the value of $\log_2 m$ is a natural number.

**Patentansprüche**

1. Verfahren zur Ultrabreitbandkommunikation (UWB-Kommunikation) unter Verwendung von Frequenzbandmodulation, das die folgenden Schritte umfasst:

Erzeugen erster UWB-Signale (S30),
Senden der erzeugten ersten UWB-Signale über wenigstens einen Funkkanal (S40) und
Empfangen zweiter UWB-Signale (S50) und Demodulieren der empfangenen zweiten UWB-Signale in digitale Daten unter Verwendung eines vorgegebenen Demodulationsverfahrens (S50, S60),
**dadurch gekennzeichnet, dass**
die ersten UWB-Signale durch Gruppierung von digitalen Daten (S20) in Einheiten einer vorgegebenen Anzahl von n Bits erzeugt werden, um erste Bitgruppen herzustellen, wobei n größer als 1 ist, und jede der ersten Bitgruppen zu modulieren, um entsprechende erste UWB-Signale in einem einer Vielzahl von m Teilbändern zu erzeugen, die verschiedene Mittelfrequenzen haben, die gemäß dem Bitmuster jeder der entsprechenden ersten Bitgruppen gemappt sind.

2. Verfahren nach Anspruch 1, wobei das Modulieren der ersten Bitgruppen das Erzeugen der ersten UWB-Signale des m Teilbänder-Mapping in den ersten Bitgruppen in der Reihenfolge der ersten Bitgruppen, umfasst.

3. Verfahren nach Anspruch 1 oder 2, wobei das Demodulieren der empfangenen zweiten UWB-Signale das Erzeugen des zweiten Bitgruppen-Mapping in den jeweiligen Teilbändern, nach dem Detektieren der empfangenen zweiten UWB-Signale für die entsprechenden Teilbänder, und das Erzeugen von digitalen Daten unter Verwendung der erzeugten zweiten Bitgruppen umfasst.

4. Verfahren nach Anspruch 3, wobei das Erzeugen der zweiten Bitgruppen das Integrieren von Energiepegeln der zweiten UWB-Signale, die jedes für die Länge jedes zweiten UWB-Signals durch einen Bandpassfilter für jedes Teilband gegangen sind, und das Erzeugen der zweiten Bitgruppen, die in die Teilbändern gemappt werden, deren integrierte Werte größer als eine vorgegebene Stärke sind, umfasst.

5. Verfahren nach einem der vorhergehenden Ansprüche, wobei die vorgegebene Anzahl von n Bits, die die erste Bitgruppe bilden, durch die folgende Gleichung definiert wird:

$$n = [\log_2 m],$$

wobei m die Anzahl von verfügbaren Teilbändern bezeichnet.

6. Verfahren nach Anspruch 5, wobei der Wert von $\log_2 m$ eine natürliche Zahl ist.

7. System für Ultrabreitbandkommunikation (UWB-Kommunikation), umfassend:

einen Sender (100), der so eingerichtet ist, dass er erzeugte erste UWB-Signale über wenigstens einen Funkkanal sendet, und
einen Empfänger (200), der so eingerichtet ist, dass er zweite UWB-Signale empfängt und die zweiten empfangenen UWB-Signale unter Verwendung eines vorgegebenen Demodulationsverfahrens in digitale Daten demoduliert,
**dadurch gekennzeichnet, dass**
der Sender (100) so eingerichtet ist, dass er digitale Daten in Einheiten einer vorgegebenen Anzahl von n Bits gruppiert, um erste Bitgruppen zu erzeugen, wenn n größer als 1 ist, und jede der ersten Bitgruppen in entsprechende erste UWB-Signale in eines einer Vielzahl von m Teilbändern moduliert, die verschiedene Mittelfrequenzen haben, die entsprechend dem Bitmuster von jeder der entsprechenden ersten Bitgruppen gemappt sind.

8. System nach Anspruch 7, wobei der Sender (100) umfasst:

eine Eingabeeinheit (110), die so eingerichtet ist, dass sie digitale Daten empfängt,
m UWB-Signalgeneratoren (130), die so eingerichtet sind, dass sie erste UWB-Signale von m Teilbändern erzeugen, die verschiedene Mittelfrequenzen haben,
eine Bitgruppen-Mapping-Einheit (120), die so eingerichtet ist, dass sie die digitalen Daten in Einheiten der vorgegebenen Anzahl von Bits gruppiert, um erste Bitgruppen herzustellen, und die die UWB-Signalgeneratoren (130) aktiviert, die jeder die ersten UWB-Signale von m Teilbändern, in die entsprechenden ersten Bitgruppen gemappt, erzeugen, und
eine Funkfrequenz-Sendeeinheit (RF-Sendeeinheit) (140), die so eingerichtet ist, dass sie die gemappten Teilbänder über den wenigstens einen Funkkanal sendet.

9. System nach Anspruch 7 oder 8, wobei der Empfänger (200) umfasst:

Signaldetektoren (230) für m Teilbänder, die verschiedene Mittelfrequenzen haben,
eine Bitgruppen-Mapping-Einheit (220), die so eingerichtet ist, dass sie zweite Bitgruppen erzeugt, die in Signale, die in die Signaldetektoren (230) eingegeben werden, gemappt sind, und unter Verwendung der erzeugten zweiten Bitgruppen digitale Daten erzeugt.

10. System nach Anspruch 9, wobei jeder der Signaldetektoren (230) einen Bandpassfilter zum Filtern der Frequenz jedes Teilbandes und einen Energiedetektor umfasst.

11. System nach Anspruch 7, 8, 9 oder 10, wobei die vorgegebene Anzahl von n Bits, die jede Bitgruppe bilden, durch die folgende Gleichung definiert ist:

$$n = [\log_2 m],$$

wobei m die Anzahl von verfügbaren Teilbändern bezeichnet.

12. System nach Anspruch 11, wobei der Wert von $\log_2 m$ eine natürliche Zahl ist.

**EP 1 499 031 B1**

**Revendications**

1. Procédé de communication à bande ultra-large (UWB) utilisant une modulation de bande de fréquence comportant les étapes consistant à :

   générer des premiers signaux UWB (S30),
   émettre les premiers signaux UWB générés sur au moins un canal sans fil (S40), et
   recevoir des seconds signaux UWB (S50) et démoduler les seconds signaux UWB reçus en données numériques en utilisant un procédé de modulation prédéterminé (S50, S60),
   **caractérisé en ce que** :

   les premiers signaux UWB sont générés en regroupant des données numériques (S20) en unités d'un nombre prédéterminé n de bits pour produire des premiers groupes de bits où n est plus grand que 1 et en modulant chacun des premiers groupes de bits pour générer des premiers signaux UWB correspondants dans l'une d'une pluralité de m sous-bandes ayant différentes fréquences centrales mappées conformément au motif binaire de chacun des premiers groupes de bits correspondants.

2. Procédé selon la revendication 1, dans lequel la modulation des premiers groupes de bits comporte la génération des premiers signaux UWB de m sous-bandes en mappant les premiers groupes de bits dans l'ordre des premiers groupes de bits.

3. Procédé selon la revendication 1 ou 2, dans lequel la démodulation des seconds signaux UWB reçus comporte la génération de seconds groupes de bits en mappant les sous-bandes respectives après détection des seconds signaux UWB reçus pour les sous-bandes correspondantes, et la génération de données numériques en utilisant les seconds groupes de bits générés.

4. Procédé selon la revendication 3, dans lequel la génération des seconds groupes de bits comporte l'intégration de niveaux d'énergie des seconds signaux UWB ayant chacun traversé un filtre passe-bande pour chaque sous-bande par la longueur de chaque second signal UWB, et la génération des seconds groupes de bits en mappant les sous-bandes dont des valeurs intégrées sont supérieures à une grandeur prédéterminée.

5. Procédé selon l'une quelconque des revendications précédentes, dans lequel le nombre prédéterminé n de bits formant les premiers groupes de bits est défini par l'équation ci-dessous :

$$n = [\log_2 m]$$

   où m désigne le nombre de sous-bandes disponibles.

6. Procédé selon la revendication 5, dans lequel la valeur de $\log_2 m$ est un nombre entier naturel.

7. Système de communication à bande ultra-large (UWB) utilisant une modulation de bande de fréquence comportant :

   un émetteur (100) conçu pour émettre des premiers signaux UWB générés sur au moins un canal sans fil, et
   un récepteur (200) conçu pour recevoir des seconds signaux UWB et démoduler les seconds signaux UWB reçus en données numériques en utilisant un procédé de démodulation prédéterminé,
   **caractérisé en ce que** :

   l'émetteur (100) est conçu pour regrouper des données numériques en unités d'un nombre prédéterminé n de bits pour produire des premiers groupes de bits où n est supérieur à 1, et moduler chacun des premiers groupes de bits en premiers signaux UWB correspondants dans l'une d'une pluralité de m sous-bandes ayant différentes fréquences centrales mappées conformément au motif binaire de chacun des premiers groupes de bits correspondants.

8. Système selon la revendication 7, dans lequel l'émetteur (100) comporte :

   une unité d'entrée (110) conçue pour recevoir des données numériques,

m générateurs de signaux UWB (130) conçus pour générer des premiers signaux UWB de m sous-bandes ayant différentes fréquences centrales,

une unité de mappage de groupes de bits (120) conçue pour regrouper les données numériques en unités du nombre prédéterminé de bits pour produire les premiers groupes de bits et activer les générateurs de signaux UWB (130) chacun générant les premiers signaux UWB de m sous-bandes mappées en premiers groupes de bits respectifs, et

une unité d'émission radiofréquence (RF) (140) conçue pour émettre les sous-bandes mappées sur le au moins un canal sans fil.

9. Système selon la revendication 7 ou 8, dans lequel le récepteur (200) comporte :

des détecteurs de signaux (230) pour m sous-bandes ayant différentes fréquences centrales, et

une unité de mappage de groupes de bits (220) conçue pour générer des seconds groupes de bits mappés en signaux délivrés en entrée aux détecteurs de signaux (230) et générer des données numériques en utilisant les seconds groupes de bits générés.

10. Système selon la revendication 9, dans lequel chacun des détecteurs de signaux (230) comporte un filtre passe-bande pour filtrer la fréquence de chaque sous-bande, et un détecteur d'énergie.

11. Système selon la revendication 7, 8, 9 ou 10, dans lequel le nombre prédéterminé n de bits formant chaque groupe de bits est défini par l'équation ci-dessous :

$$n = [\log_2 m]$$

où m désigne le nombre de sous-bandes disponibles.

12. Système selon la revendication 11, dans lequel la valeur de $\log_2 m$ est un nombre entier naturel.

# FIG. 1

# FIG. 2A

| Simbol | Bit group |
|--------|-----------|
| S1 | 00 |
| S2 | 01 |
| S3 | 10 |
| S4 | 11 |

# FIG. 2B

| Simbol | Bit group |
|--------|-----------|
| S1 | X00 |
| S2 | X01 |
| S3 | X10 |
| S4 | X11 |

# FIG. 3

EP 1 499 031 B1

**transmitter(100)**

110        120        130        140

Digital data → | Data input unit | → | Bit group mapping unit | → | UWB signal generator | → | RF transmitting unit |

**receiver(200)**

210        220        230        240

Digital data ← | Data output unit | ← | Bit group mapping unit | ← | Signal detector | ← | RF receiving unit |

# FIG. 4

FIG. 5

UWB signals

230

232-1 Band pass filter(f1) → 234-1 square → 236-1 integrator

232-2 Band pass filter(f2) → 234-2 square → 236-2 integrator

232-m Band pass filter(fn) → 234-m square → 236-m integrator

238 determiner

Bit group mapping unit(220) → Digital data

# FIG. 6

```
        ┌─────────────────────┐
        │        start        │
        └─────────────────────┘
                   │
                   ▼
        ┌─────────────────────┐  S10
        │   Input digital data │
        └─────────────────────┘
                   │
                   ▼
        ┌─────────────────────┐  S20
        │  Generate bit groups │
        └─────────────────────┘
                   │
                   ▼
        ┌─────────────────────┐  S30
transmitting│ Generate UWB signals │
        └─────────────────────┘
                   │
                   ▼
        ┌─────────────────────┐  S40
        │ Transmit UWB signals over │
        │    wireless channel  │
        └─────────────────────┘
                   │
                   ▼
        ┌─────────────────────┐  S50
        │  Receive UWB signals │
        └─────────────────────┘
                   │
                   ▼
        ┌─────────────────────┐  S60
receiving│   Detect UWB signals │
        └─────────────────────┘
                   │
                   ▼
        ┌─────────────────────┐  S70
        │  Generate bit groups │
        └─────────────────────┘
                   │
                   ▼
        ┌─────────────────────┐  S80
        │  Output digital data │
        └─────────────────────┘
                   │
                   ▼
        ┌─────────────────────┐
        │         end         │
        └─────────────────────┘
```

FIG. 7

**EP 1 499 031 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003099299 A1